# EUROPEAN PATENT APPLICATION

(11) **EP 4 826 630 A1**
(43) Date of publication of application: **21.10.2026**
(21) Application number: 25170481.3
(22) Date of filing: 14.04.2025
(51) Int. Cl.: G06Q 50/00, G06Q 50/06, H04L 51/02, H04L 51/222, H04L 51/52

(54) **POWER OUTAGE INFERENCE USING SOCIAL MEDIA DATA**

(71) Applicant: Hitachi Energy Ltd, 8050 Zürich (CH)
(72) Inventor: ZAK-STEFANOWSKA, Emilia, 30-318 Kraków (PL); CHMIELOWIEC, Krzysztof, 32-089 B b o (PL); BOMBA, Piotr, 26-400 Lipno (PL); JAWAD, Muhammad, 31-315 Krakow (PL)
(74) Representative: Valea AB

(57) **Abstract**

Disclosed is a system and method for identifying and diagnosing power distribution problems by analyzing social media data. The method comprises retrieving (101) social media posts including social media data, pre-filtering (102) that data according to specified parameters, and determining (103) whether it relates to a power distribution problem. Each post is then classified (104) as having either sufficient or insufficient information to define the problem, based on a predefined set of information inquiries. For insufficiently detailed posts, an interactive participant protocol (105) is launched, which involves initiating (105a) an LLM-based chatbot to collect missing data, determining (105b) problem relevance based on the user interaction, and reclassifying (105c) the post. Once sufficiently detailed, a power distribution problem diagnosis is generated (106). The method is executable via a computer program (1130) running on a processor (1110) and can trigger user engagement actions (107) to post updates on the social media network.

## Description

### TECHNICAL FIELD

The present disclosure generally relates to the domain of power distribution systems, and more specifically to methods, systems, and computer programs for analyzing social media data to identify and diagnose power distribution problems. The disclosed techniques further integrate with an outage management system for receiving and processing trouble reports based on social media data.

### BACKGROUND

Outage Management Systems (OMS) are systems used for identifying, managing, and restoring power outages for utility companies. Traditionally, OMS systems rely on customer telephone calls to report power outages in areas, which lack real-time monitoring via SCADA or Advanced Metering Infrastructure (AMI). Power outage report is a document confirming the occurrence of an outage at a precisely defined point or area of the power network. Reliance on customer feedback has significant limitations in the current era of digital communication. The delay and reluctance in telephone reporting, incomplete coverage, and scalability issues can lead to potential gaps in data collection.

The widespread use of social media platforms generates a vast amount of real-time information, including data about power outages. Analyzing publicly available posts and discussions can help in identifying the relevant signals of power grid issues, treating online users' content as "social sensors".

It is known from Sun et al. (IEEE Trans. Smart Grid, vol. 7, no. 5, pp. 2516-2524, Sept. 2016) to detect and locate power outages using social media data. The disclosed system analyses large-scale tweet data, which is typically noisy and fragmented, to infer outage events.

It is further known from Mao et al. (Int. J. Digital Earth, vol. 12, pp. 1-15, 2018) to detect power outages by analyzing data from social media platforms such as Twitter. The disclosed method leverages text mining and natural language processing (NLP) techniques to extract outage-related information from user-generated content.

Further efforts within this technical field include U.S. Patent Publication 10,381,869 B2 focusing on automated processes to identify power distribution problems and, U.S. Patent Publication 2014/0081998 A1 disclosing methods for identifying social media posts relevant to a power distribution system.

Despite these prior efforts within the technical field, the sheer volume of information shared on social media results in a number of challenges when it is utilized for the purpose of power outage management. The informal and unique nature of online communication pose significant challenges for data standardization and analysis. Posts often lack key details such as location or time, which are essential to accurately diagnosing power distribution problems. Additionally, the variability in language and the presence of irrelevant information make it difficult to filter and analyze the social media data effectively.

### BRIEF DESCRIPTION OF THE DRAWINGS

- Figure 1 illustrates a method performed by a network node according to the first aspect.
- Figure 2 and 3 shows embodiments according to the first aspect.
- Figure 4 illustrates the present invention according to a second aspect.
- Figure 5 illustrates the present invention according to a third aspect.
- Figure 6 shows an embodiment of the present invention illustrated as a framework leveraging LLMs for sentiment analysis and real-time interaction.
- Figure 7 shows an example of filtering social media posts by identifying the keyword "power".
- Figure 8 shows an example of LLM-powered sentiment analysis classifying social media posts.
- Figure 9 shows an example of an LLM-driven chatbot engaging with the user to retrieve missing information.
- Figure 10 shows an example of a user engagement module creating a publicly available message to gather updates.
- Figure 11 shows a result from an evaluation in the form of a confusion matrix illustrating the accuracy of the LLM engine for sentiment analysis according to the framework illustrated in figure 6.
- Figure 12 shows an example of a full answer using a LLM for Named Entity Recognition.

### SUMMARY

In a first aspect of the present invention there is proposed a method performed by a network node. The method includes the following:
Retrieving social media posts from a social media network platform.

Pre-filtering the social media posts based on a set of pre-filtering parameters.

For each social media post that meets the established pre-filtering criteria, the method involves determining whether the social media post is connected to a power distribution problem in a power distribution system. For social media post deemed relevant, the method further includes classifying the social media post as either sufficient or insufficient to define the power distribution problem according to a predefined set of information inquiries.

If the information in the social media post is insufficient, the network node initiates an interactive participant protocol that involves:
- Engaging an LLM-based chatbot to gather additional information from the user who posted the social media post based on the predefined information inquiries.
- Determining whether the social media post is connected to a power distribution problem based on at least the interaction data.
- Reclassifying the social media post based on the interaction data as either sufficient or insufficient to define the power distribution problem according to the predefined information inquiries.

For social media posts classified as containing sufficient information, a power distribution problem diagnosis is created.

In a second aspect there is proposed a computer program that comprises instructions that causes a processor to perform the operations according to the first aspect or embodiments thereof.

In a third aspect there is proposed a outage management system (OMS) configured to receive a trouble report compiled from social media data and transmitted to the outage management system in accordance with embodiments of the first aspect.

### DETAILED DESCRIPTION

Detecting power distribution problems quickly and reliably is crucial for minimizing service interruptions, reducing economic impacts on businesses, and preventing safety hazards. Quick detection allows utility companies to respond promptly, enhancing the overall efficiency of the power grid and facilitating timely maintenance and repairs. Improving the speed and reliability of outage detection therefore contributes to a more resilient and dependable power infrastructure. Consequently, Outage Management Systems (OMSs) are essential for utility companies to identify, manage, and restore power outages. Traditionally, these systems have relied on customer telephone calls to report outages, especially in areas without real-time monitoring through Supervisory Control and Data Acquisition (SCADA) or Advanced Metering Infrastructure (AMI).

Current reliance on customer telephone outage reports might lead to significant delays and gaps in data collection. Not all customers report outages immediately, if at all, which might hinder the utility's ability to quickly identify and localize the problem. These challenges have led the inventors to exploring social media data as a data source for facilitating the detection of power distribution problem.

By enabling real-time interaction and feedback, the present invention improves data collection and user engagement, fostering better relationships between utility companies and their customers.

The present invention relates to a multi-step processing and interaction pipeline that can filter, analyze, and extract relevant information from social media posts. The obtained information may then be integrated into the OMSs for more efficient outage management and diagnosis of power distribution problems.

The proposed technique is novel in handling challenges, such as inadequate public engagement and incomplete reporting, processing vast amounts of social media information, lack of automation and flexibility in flagging relevant messages, and the absence of real-time feedback mechanisms.

By overcoming aforementioned challenges, the overall effectiveness of the OMSs improves and also contributes to a more resilient power infrastructure.

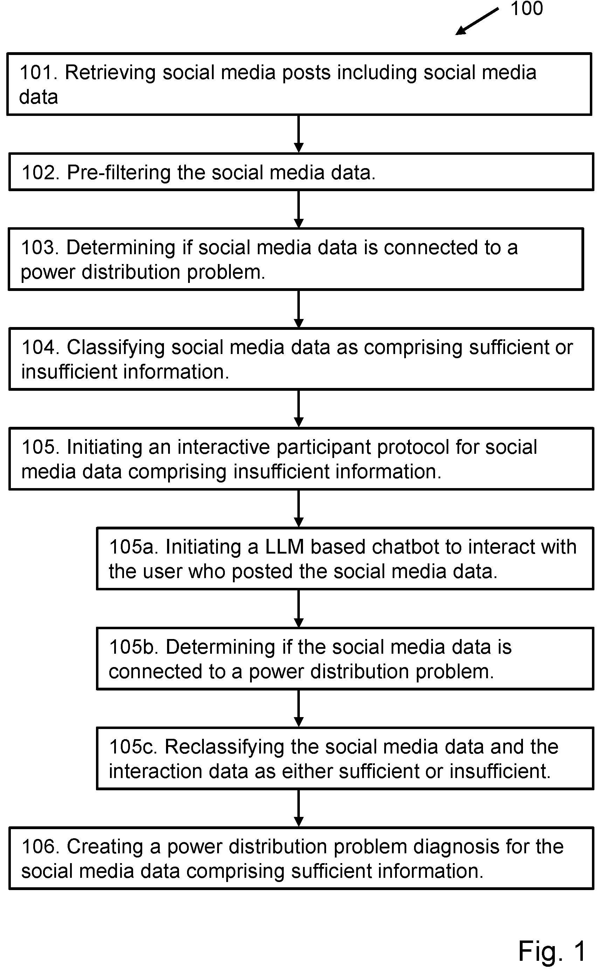

In a first aspect of the present invention there is proposed a method 100 performed by a network node, as illustrated in figure 1. The method includes the following:
Retrieving 101 social media posts including social media data from a social media network platform.

Pre-filtering 102 the social media data of a social media post based on a set of pre-filtering parameters.

For each of the prefiltered social media posts (i.e., the posts that have passed the pre-filtering step), the method comprises determining 103 if the social media data of the social media post is connected to a power distribution problem in a power distribution system. Meaning that, it is only for the social media posts that have fulfilled the criteria(s) established based on the set of pre-filtering parameters that the network node determines if the social media posts are relevant (i.e., connected) to a power distribution problem.

For each of the social media posts that have been determined to be relevant for a power distribution problem the method comprises classifying 104 the social media data of the social media post as comprising sufficient or insufficient information so as to define the power distribution problem according to a predefined set of information inquiries. Meaning that, it is only for the social media posts including social media data determined to be relevant for a power distribution problem that the network node classifies 104 the social media data of the social media post.

For each social media post including social media data classified to comprise insufficient information, the network node initiates an interactive participant protocol 105 comprising at least the steps of:
Initiating 105a a LLM based chatbot to interact with the user who posted the social media post. The LLM based chatbot is configured to inquire about information relating to the predefined set of information inquiries.
Determining 105b if the social media post is connected to a power distribution problem in the power distribution system based on at least interaction data from the interaction between the LLM based chatbot and the user who posted the social media post.
Classifying 105c the social media data of the social media post and the interaction data as either sufficient or insufficient so as to define the power distribution problem according to the predefined set of information inquiries.

For each of the social media posts including social media data classified to comprise sufficient information, creating 106 a power distribution problem diagnosis.

By enabling for fast filtering algorithms that are computationally lightweight for an initial rapid screening of social media posts, the proposed method mitigates the computational overhead otherwise associated with full-scale compute demanding analyses, thereby enabling near real-time processing of large data volumes.

For posts lacking sufficient information so as to define the power distribution problem, the network node initiates an interactive participant protocol by engaging the original user through an LLM-driven chatbot - ensuring targeted inquiries and immediate user feedback. This real-time interaction both reduces reliance on infrequent or delayed telephone reports and addresses user groups prone to "telephobia," thereby improving overall coverage and completeness of outage reports.

Consequently, the technical effects include (i) more accurate and timely fault detection in power distribution systems; (ii) reduced latency in gathering and verifying critical post information; (iii) automation of both relevance screening and completeness checking of social media data; and (iv) a dynamic feedback mechanism that captures additional power distribution problem related details in real time.

On an economic level, faster detection of power distribution issues through automated social media screening and the subsequent interactive participant protocol minimizes downtime, thereby reducing both operational and societal costs. From a technical perspective, employing rapid non-LLM pre-filtering in conjunction with targeted LLM-based analysis significantly enhances system scalability, automates semantic classification, and expedites overall response times. In addition, the mechanism of engaging users via a chatbot fosters heightened social media participation, elevates public awareness, and catalyzes a collaborative environment. By effectively leveraging community empowerment, the method promotes shared responsibility and bolsters community resilience, ensuring more comprehensive and timely identification of power distribution problems.

In embodiments, the method may comprise retrieving a set of pre-filter parameters relating to a power distribution system from e.g., a outage management system (OMS) associated with a power distribution system. Preferably, the pre-filtering parameters include a set of keywords related to power distribution system, the location of the user posting the social media post and the time at which the social media post was published.

The pre-filtering parameters may be determined or based on data retrieved from sources such as IoT sensors, satellite imagery, or utility company reports.

The LLM based chatbot initiated as part of the interactive participant protocol 105 may be configured to follow a predefined protocol and/or be queried information relevant to the interaction with the user who has posted the social media post. In embodiments, the LLM based chatbot is queried with a set of instructions and the social media data of the social media post associated with the interaction. In alternative embodiments, the LLM based chatbot is only queried with a set of instructions. The latter embodiment may be preferable in scenarios where cyber security is of greater importance and/or certain judicial regulation prohibiting alternative operations.

In embodiments, the interactive participant protocol further comprises the steps of:
if new information is retrieved, determining 105b if the pre-filtered social media data of the social media post is connected to a power distribution problem in the power distribution system based on the social media data of the social media post and data collected from the LLM based chatbots interaction with the user who posted the social media post and if it is connected, reclassify the social media data of the social media post as either sufficient or insufficient so as to define the power distribution problem according to the predefined set of information inquiries.

Determining 105b should be understood as a re-evaluation or confirmation based on the new information gathered via the chatbot

As the skilled person understands, the social media data of the social media post and/or data collected from the LLM based chatbots interaction with the user who posted the social media post may be combined into one data set.

Additionally, this data may or may not have been processed before using processing methods known to the skilled person for the purpose of making the data more easily processed when determining if the pre-filtered social media data of the social media post is connected to a power distribution problem.

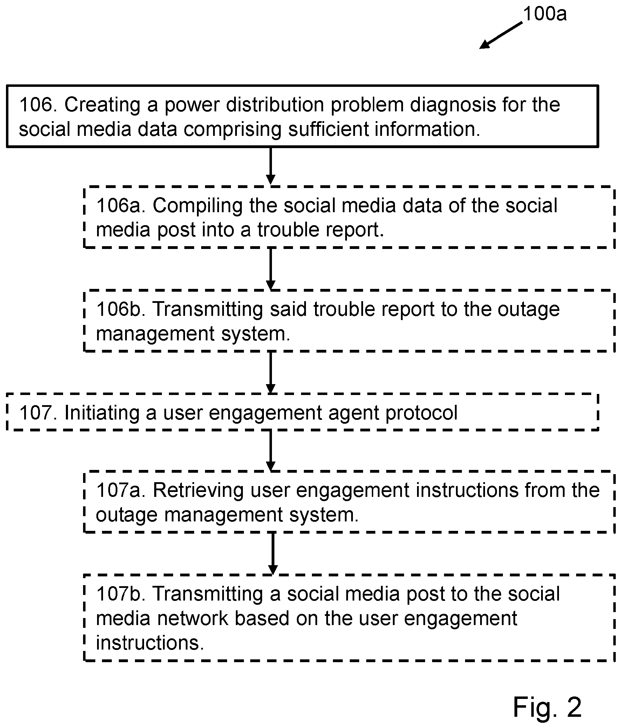

In an embodiment illustrated in figure 2, the power distribution system is associated with an outage management system and creating 106 the power distribution problem diagnosis comprises compiling 106a the social media data of the social media post into a trouble report and transmitting 106b said trouble report to the outage management system.

The network node may compile 106a the social media data by parsing the social media data into pre-defined fields, including: incident description, location information, timestamp, user contact/identity and/or urgency score. The purpose of compiling 106a is to ensure that trouble reports conform to a uniform schema, which facilitates subsequent automated or manual handling.

Once compiled, the trouble report is automatically dispatched to the OMS through a suitable communication interface. Various implementation details may include: network protocols, API-based integration and/or event-driven messaging.

Upon receipt by the OMS, the trouble report is then integrated with existing outage management workflows, allowing utility personnel or automated modules to evaluate, escalate, and coordinate response efforts. In this manner, the entire process-from detecting a power distribution issue via social media data to feeding actionable information into the OMS-is streamlined and enables near real-time responsiveness.

In one embodiment, as illustrated in figure 2, the method further comprises: for each of the trouble reports received by the outage management system, initiating a user engagement agent protocol 107 comprising at least the steps of:
retrieving 107a user engagement instructions from the outage management system; and,
transmitting 107b a social media post to a social media network based on the user engagement instructions.

A trouble report may be received by the outage management system in any number of ways, including: manual input based on information gained from e.g., a telephone call with a user of the power distribution system; or, automatic input from e.g., sensors arranged within the power distribution system.

In embodiments, the user engagement instructions may include at least information on the location of a identified power outage or identified potential power outage.

In some embodiments, the user engagement instructions may comprise information relating to instructions for users of the power distribution system.

As understood by the skilled person, transmitting 107b a social media post to a social media network entails posting (i.e., publishing) a social media post to one or more social groups within one or more social media networks.

In embodiments, the user engagement agent protocol 107 is initiated for chosen trouble reports amongst all trouble reports received by the outage management system.

In some embodiments, there is a configurable time delay between subsequent transmissions 107b of social media posts to the social media network.

This time delay may be between 3 minutes to 12 hours, preferably between 15 minutes to 2 hours, e.g., 30 minutes.

The time delay is beneficial in scenarios where it is important to mitigate the risk of the network node flooding a social media channel (i.e., the social media network) with posts if the network node, e.g., the outage management system, receives a large number of trouble reports in short period of time.

In one embodiment, the user engagement instructions comprise instructions relating to whether or not the social media post for transmission to the social media network should be transmitted 107b to the social media network.

Additionally, the network node may determine if the user engagement instructions should comprise instructions to transmit 107b or not transmit the social media post for transmission based on previous trouble reports retrieved by the outage management system. As already mentioned in relation to other embodiments, the outage management system may have retrieved trouble reports by any means, such as by manual input to the outage management system or e.g., by an automatic process performed by a network node.

In embodiments, determining 103 if the pre-filtered social media data of the social media post is connected to a power distribution problem in the power distribution system is performed by a LLM.

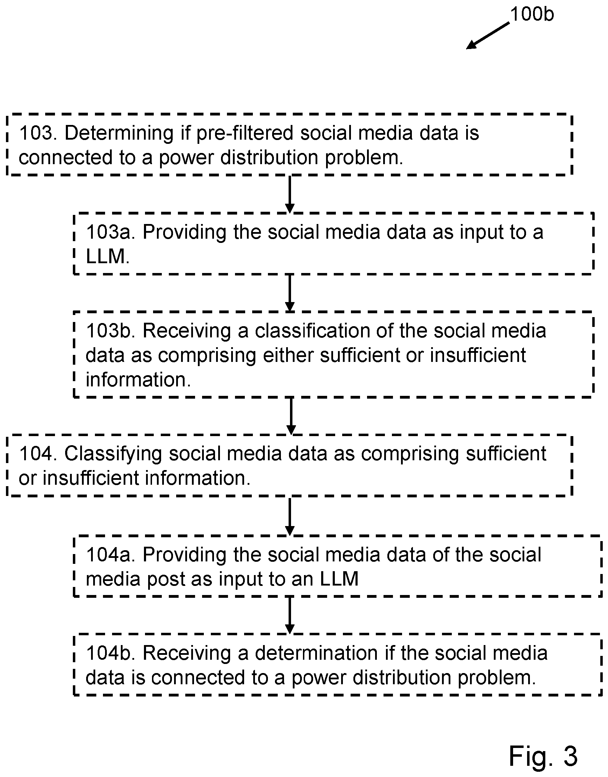

As shown in figure 3, determining 103 may be performed by providing 103a the social media data of the social media post as input to a LLM and receiving 103b a determination if the pre-filtered social media data of the social media post is connected to a power distribution problem in the power distribution system.

In some embodiments, classifying 104 the social media data of the social media post is connected to a power outage as comprising either sufficient or insufficient information is performed by an LLM

As also shown in figure 3, classifying 104 may be performed by providing 104a the social media data of the social media post as input to a LLM and receiving 104b a classification of the social media data of the social media post connected to a power outage as comprising either sufficient or insufficient information.

In one embodiment, pre-filtering 102 the social media data is performed through one or more operations not including an LLM. In another embodiment, or the same embodiment, pre-filtering 102 the social media data is performed through one or more deterministic, probabilistic or machine-learning based filtering operations.

By harnessing fast filtering algorithms that are computationally lightweight for an initial rapid screening of social media posts, the proposed method mitigates the computational overhead otherwise associated with full-scale LLM-based analyses, thereby enabling near real-time processing of large data volumes. In contrast to purely rule-based or keyword-based systems, the inclusion of a large language model (LLM) module not only adapts automatically to evolving linguistic patterns but also classifies posts by determining whether they contain sufficient details (e.g., location, severity) or require additional information.

In embodiments, the predefined set of information inquiries comprises at least the location of a power outage. The social media data of the social media post may then preferably be classified as comprising sufficient information if it comprises the location of a power distribution problem.

In one proposed embodiment, creating 106 a power distribution problem diagnosis comprises retrieving additional data from at least one of: the outage management system, IoT sensors, satellite imagery, utility company reports, advanced metering infrastructure, power system simulation results, measurements from various grid components (e.g., protection equipment) available in SCADA systems and video surveillance data.

The advantages of data aggregation with the above mentioned additional data types and how they may be used is summarized below.

OMS merges real-time data on active outages, restoration timelines, and disruptions. Social media complaints can be cross-checked against official OMS records to confirm or dismiss reported power failures. Integration with user posts helps distinguish between localized, unreported service issues and known, large-scale events. By correlating user-generated data with active outage tickets, utilities can expedite investigating emerging faults not yet flagged in the OMS. This synchronization refines problem identification, reduces response time, and avoids duplication of efforts, making the combined data more reliable and actionable for diagnosing power distribution problems.

IoT devices placed across grid infrastructure may be used to detect temperature, voltage, or load fluctuations. Social media reports about flickering lights or micro-outages gain validity if sensor logs confirm corresponding anomalies. By matching real-time sensor data (e.g., abnormal heating or currents) to reported problems, utilities can prioritize maintenance and address emergent failures more swiftly. The integrated approach mitigates false alarms, supports predictive maintenance strategies, and may refine the location-based diagnosis of issues. Therefore in certain scenarios, IoT sensor data complements anecdotal user posts with more objective and granular measurements.

Satellite imagery may reveal external damage, such as downed lines or infrastructure compromised by storms or flooding. Social media posts referencing regional power disruptions can be validated by checking corresponding aerial images. This approach may in certain scenarios aid in quickly pinpointing affected areas and supplies visual confirmation when multiple online complaints surface. By overlaying user-reported outages with satellite-derived damage assessments, utilities may gain clarity on the root causes, accelerating dispatch decisions. The combination also enhances resource allocation by distinguishing minor problems from large-scale catastrophes across wide geographic zones.

Official statements or maintenance logs from utilities provide may provide an authoritative context for user-reported issues. Social media data indicating unexpected outages can be verified against these records to confirm scheduled work, known load-shedding practices, or previous warnings. Conflicts between user posts and utility reports may highlight overlooked issues. Likewise, matching new chatbot-collected information with ongoing operations can mitigate confusion and streamline resolution processes. This reduces escalation of known or planned incidents, freeing resources to focus on genuinely anomalous outages or equipment failures.

AMI typically collects precise consumption and service data, monitoring voltage levels, power interruptions, and meter performance in scenarios where AMI data is available. Integrating AMI readings with social media complaints about intermittent outages helps confirm or refute reported disturbances. For example, if meter logs align with a user's account of a blackout, the credibility of that complaint may rise, spurring quicker diagnosis. AMI data also provides historical context, allowing comparisons between current and past anomalies in the same area. This synergy speeds problem identification, enhances outage mapping accuracy, and mitigates the risk of unverified, duplicated, or fabricated reports.

Simulation outputs model how load, faults, or extreme conditions might affect power flow. Cross-referencing social media clusters of outage complaints with predicted trouble spots helps refine possible fault locations. If real-time user reports coincide with simulated vulnerabilities, the likelihood of identifying the responsible component or line section may in certain scenarios be increases. This predictive layer may let utilities anticipate chain reactions in nearby feeders and informs proactive measures. Integrating simulation data with on-the-ground feedback can reveal unplanned failure scenarios, supplementing real operational data and guiding targeted maintenance.

Supervisory Control and Data Acquisition (SCADA) aggregates signals from relays, breakers, and voltage regulators. By matching social media-reported outages with SCADA alerts, operators can pinpoint trip events or anomalies correlating with reported times and locations. This correlation refines root-cause analysis and accelerates field intervention. When a certain region's users all report flickering lights simultaneously, SCADA logs revealing a protection device trip confirm the issue's technical basis. The enhanced situational awareness may consolidate scattered user data into actionable insights, minimizing confusion and enabling rapid, informed responses.

Incorporating CCTV or similar video feeds can offer visual confirmation of public lighting status and street-level power disruptions. Social media reports of streetlights going dark can be quickly validated by video snapshots, aiding precise fault localization. If cameras show consistent darkness in a purportedly affected area, technicians can expedite inspections. Video surveillance data also helps identify physical damage or tampering. Correlating live or recorded footage with the timing and frequency of online complaints may in certain scenarios facilitate building a more robust evidentiary base for diagnosing power distribution issues.

In embodiments, the predefined set of information inquiries comprises at least one of: location of the power distribution problem; severity of the power distribution problem; and/or duration of the power distribution problem. The LLM based chatbot initiated as part of the interactive participant protocol 105 may then be configured to inquire about information relevant for determining if the social media data of the social media post is connected to a power distribution problem in the power distribution system before inquiring about information relating to the predefined set of information inquiries.

For example, consider a social media post that has passed the pre-filtering step 102 and has been determined 103 to be connected to a power distribution problem but has been classified 104 to comprise insufficient information so as to define the power distribution problem according to a predefined set of information inquiries. The social media post may for example have been classified 104 as comprising insufficient because it lacked the location of the power distribution problem. The LLM based chatbot may in this scenario be queried by the network node to inquire about information that may be used to determine with certainty that: the social media post is related to a power distribution problem in the power distribution system: or, merely related to a non-grid-related internal concern (e.g., private household wiring faults) - before the LLM-based chatbot inquiries about the location of the power distribution problem.

Additionally, the LLM based chatbot may be instructed to inquire about information relating to determining 105b if the power distribution problem relates to a power distribution system only if the social media post is determined to be connected to a power distribution problem with a certainty lower than a predetermined certainty threshold. However, in some embodiments, a certainty is not determined and the network node only determines 103 if the social media post is or is not connected to a power distribution problem.

Accordingly, in embodiments, determining 103 if the pre-filtered social media data of the social media post is connected to a power distribution problem in a power distribution system is performed by providing 103a the social media data of the social media post as input to a LLM and receiving 103b a determination if the pre-filtered social media data of the social media post is connected to a power distribution problem in the power distribution system. The determination being associated with a certainty score indicating the certainty of the determination 103.

In other words, the determination 103 may be associated with a certainty score representing the probability that the social media post is indeed connected to a power distribution problem, and not merely related to a non-grid-related internal concern.

In further embodiments, a social media post may be classified 104 as comprising insufficient information if the social media post is associated with a certainty score below a predetermined threshold, thereby initiating the interactive participant protocol 105.

In other words, the predefined set of information inquiries may include an inquiry relating to the certainty score associated with the social media post and the network node may then classify 104 the social media data of the social media post as comprising insufficient information if the social media post is associated with a certainty score below a predetermined threshold. In some embodiments, the predefined set of information inquiries may additionally include an inquiry relating to position of a power distribution problem and the network node may then classify 104 the social media data of the social media post as comprising insufficient information if the social media post is associated with a certainty score below a predetermined threshold and/or lacks information relating to the position of the power distribution problem.

Associating the determination 103 with a certainty score provides beneficial effects in certain scenarios since it may ensure that users posting social media are not overburdened with unsolicited messages and that the chatbot's clarifying questions (aimed at verifying a grid-related problem) are directed to posts likely to provide meaningful diagnostic information for utility service operators.

In embodiments, the predefined set of information inquiries may comprise inquiries relating to the severity of a power distribution problem and/or the duration of a power outage. The method may then further comprise the steps:
for the social media data of the social media post classified to comprise sufficient information and lacking information about at least one information inquiry amongst the predefined set of information inquiries:
initiating a LLM based chatbot to interact with the user who posted the social media post, wherein the LLM based chatbot is configured to inquire about information relating to at least one information inquiry amongst the predefined set of information inquiries.

In other words, the information inquiries amongst the predefined set of information inquiries may be of different character in that some are essential while some are nice to have. For example, according to the above recited embodiment, a social media post may be classified as comprising sufficient information because it comprises the location of the power distribution problem but may lack another information relating to another inquiry amongst the predefined set of information inquiries, such as e.g., the severity of the power distribution problem. The LLM-based chatbot may then be initiated to inquire about the severity of the power distribution problem and the network node may create 106 a power distribution problem diagnosis in parallel or subsequently.

In further embodiments, the network node may create 106 a power distribution problem diagnosis before initiating the LLM-based chatbot to inquire about additional information from a user who posted a social media post classified to comprise sufficient information. If new information is gained from the interaction the power distribution problem diagnosis may be updated with this new information. Alternatively, or additionally, the network node may delay creating a power distribution problem diagnosis for a predetermined timer interval and if new information is retrieved, include this information for basis in the power distribution problem diagnosis.

In further embodiments, the method comprises creating 106 a power distribution problem diagnosis by compiling 106a the social media post and any potential additional information gained from the LLM based chatbots interaction with the user who posted the social media post into a trouble report; and transmitting 106b said trouble report to the outage management system.

In embodiments, the method additionally comprises performing an urgency analysis on the social media post to determine an urgency score indicative of a time-criticality or severity level of a power distribution problem associated with the social media post.

The urgency score may be used in any number of ways. For example, the urgency score may be used to prioritize the creation and/or handling of a power distribution problem diagnosis associated with the social media post.

The urgency analysis may be performed simultaneously to when the network node determines 103 if the social media post is relevant to a power distribution problem and/or when the network node classifies 104 the social media posts.

The urgency analysis may be performed by providing social media data that has been identified as potentially indicative of a power distribution problem to a LLM as input and receiving a urgency score from the LLM.

More specifically, the LLM may be configured to examine textual cues, metadata, and semantic context to infer a measure of severity or time-sensitivity of the reported issue. By way of example, the LLM may assign higher urgency to social media posts containing key phrases such as "downed line," "sparking," "danger," "urgent," or similar language suggesting immediate risk. The model may also be trained or fine-tuned to identify additional contextual indicators of severity-such as references to critical infrastructure, indications of personal safety concerns, or high volumes of correlated posts from the same geographical area. The LLM weights these factors (potentially alongside numerical data such as timestamps, geolocation, or user-based historical accuracy) to produce a composite urgency score.

Once the urgency score is generated, the network node may communicate the urgency score to e.g., an Outage Management System (OMS). The OMS may then reference this urgency score to reorder or prioritize the resulting power distribution problem diagnoses. In certain configurations, the urgency score may be combined with further operational or utility-specific parameters, such as current load data or existing field reports, thereby enabling the utility or service provider to rapidly allocate technical and human resources in accordance with the most pressing needs. This automated prioritization helps ensure that high-risk or critically urgent reports are escalated promptly, while still processing less urgent concerns in an efficient, structured manner.

Optionally, the same or a complementary LLM-based module may dynamically adjust urgency thresholds if newly retrieved information from the interactive participant protocol (e.g., user responses to the chatbot inquiries) indicates an evolving situation. In this regard, the urgency analysis and classification steps may be iterated, with feedback from user interactions causing recalculation of the urgency score. Through this cyclical feedback mechanism, the invention allows for continuous refinement of urgency determinations, ensuring that both initial and updated user responses are captured to accurately reflect the power distribution problem's criticality.

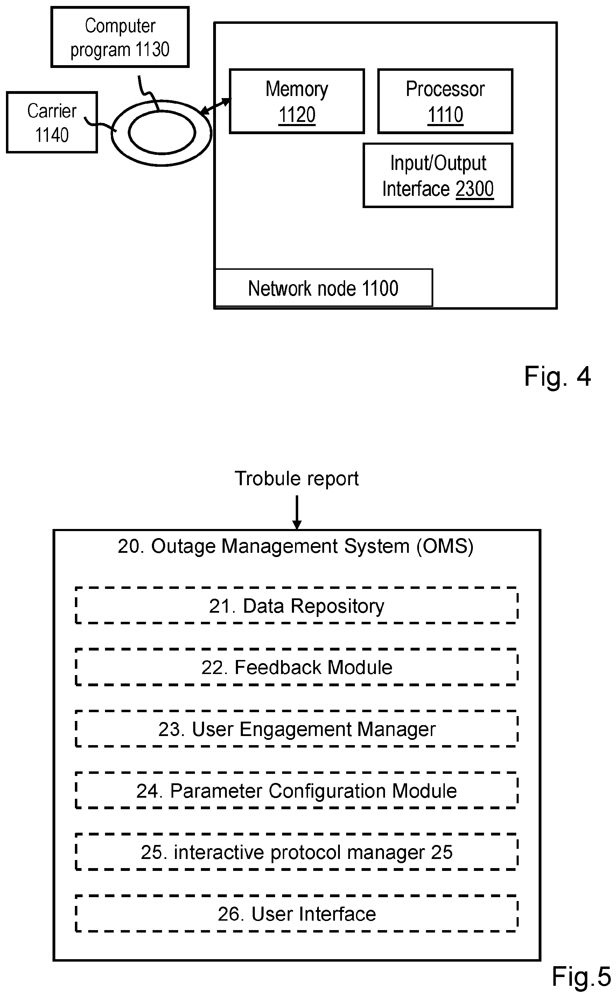

In a second aspect of the present invention, illustrated in figure 4, there is proposed a computer program 1130 comprising instructions, which when executed by a processor 1110, causes the processor 1110 to perform actions according to any of the above embodiments.

The computer program 1130 may be stored in a memory 1120 of the network node and executed by processing circuitry thereof to perform the steps of any one of the embodiments according to the first aspect.

Furthermore, the computer program 1130 may be executed in a virtualized environment on hardware, wherein the processing circuitry runs a virtualization layer supporting one or more virtual machines.

In a third aspect of the present invention, shown in figure 5, an outage management system (OMS) 20 is configured to receive the trouble report that is generated in accordance with the invention of the first aspect and transmitted to the outage management system 20 in accordance with embodiments of the first aspect or embodiments thereof. By integrating directly with the method performed by the network node, this outage management system 20 not only collects the trouble reports comprising social media-derived information, but also leverages the enhanced data completeness and accuracy that result from the interactive participant protocol (105).

Such an outage management system 20 may further include modules for rapid interpretation and visualization of incoming trouble reports, as well as interfaces for automated or semi-automated dispatch of repair crews. In particular, once the trouble report is received, the outage management system 20 can utilize the diagnostic details therein (e.g., the time and location of the power distribution problem, severity, any real-time user feedback, and other context provided by the LLM-based chatbot interactions) to prioritize remedial actions. The outage management system 20 may then, for instance, place immediate maintenance orders, generate workflow schedules, or alert relevant personnel in a faster, more targeted manner compared to conventional systems.

Moreover, the outage management system's 20 ability to accommodate structured reports originating from the method of the first aspect allows for a heightened degree of automation in detecting and addressing outages. The trouble reports can be automatically aggregated, cross-referenced with sensor data or other network information, and stored in a database for subsequent analytics and system-wide optimization. This synergy between the network node and the outage management system 20 results in an improved overall outage management cycle: from initial social media-based detection, through interactive data refinement, and finally to accurate reporting and rapid operational response.

In embodiments of the third aspect the OMS 20 comprises a data repository 21 configured to store the trouble reports for subsequent retrieval and analysis. The data repository 21 may be adapted to maintain metadata associated with each trouble report, including at least one of location information, severity, user interaction history from the LLM-based chatbot, and timestamps.

In some embodiments, the OMS 20 is further configured to correlate data from the trouble reports with at least one additional data source selected from: IoT sensors, advanced metering infrastructure (AMI), remote terminal units (RTUs), or system logs. Thereby refining the power distribution problem diagnosis and enhancing the accuracy of corrective measures.

In one embodiment, the OMS 20 comprises a feedback module 22 adapted to issue, based on the trouble reports, real-time updates regarding power distribution problem resolution status to the network node. The network node may optionally then transmit this to the least one social media network platform, a user thereon, or a dedicated user communication channel. For example, the feedback module 22 adjust the user engagement protocol 107 or interactive participant protocol 105 based on the updates so that the LLM based chatbot is configured to update one or several users on a social media network platform.

In some embodiments, the OMS 20 further comprises a user engagement manager 23 configured to interface with a user engagement agent protocol 107. The user engagement manager 23 may be adapted to e.g., automatically prompt supplemental interactions with social media users whenever the OMS 20 receives trouble reports indicating incomplete or uncertain power distribution problem details.

In some embodiments, the user engagement manager 23 establishes user engagement instructions based on at least one of real-time outage data, historical trouble reports, pre-filtering parameters, or severity assessments, and to transmit said user engagement instructions to the network node. The network node is thereby enabled to initiate additional interactions with social media platforms or users in response to evolving power distribution conditions.

In embodiments, the user engagement manager 23 is further adapted to dynamically update the user engagement instructions in real time, based on feedback received from the network node, thereby refining the scope or content of the interactive participant protocol (105) according to incoming user responses or newly detected anomalies in the power distribution network.

In one embodiment, the OMS 20 further comprises a parameter configuration module 24 adapted to establish a set of pre-filtering parameters and transmit said set of pre-filtering parameters to the network node for use in pre-filtering (102) the social media data of a social media post.

In further embodiments, the OMS 20 comprises an interactive protocol manager 25 configured to generate instructions relating to the interactive participant protocol (105) and to transmit said instructions to the network node. The instructions may be adapted to govern at least one of: initiating an LLM-based chatbot, determining additional data requests, or deciding when to conclude user interaction.

In embodiments, the OMS 20 further comprises a user interface 26 configured to display trouble reports in substantially real time. The user interface 26 may be adapted to receive input from utility operators for dispatching repair crews or generating maintenance orders in response to received trouble reports.

### Definitions

As used herein, the term "network node" refers to an entity, implemented in hardware, software, or a combination thereof, that is configured to process, exchange, or manage data within a networked environment of a power distribution system. The network node may include one or more computing devices, control units, or communication interfaces and may be operatively coupled to other networked components. The network node may, but need not, comprise an outage management system or functions typically associated with an outage management system.

The term "set of pre-filter parameters" refers to any type of parameters that may be utilized for filtering data such as social media posts, such as: geolocation based filtering, keyword based filtering, time-stamp based filtering, user-profile based filtering or engagement-metric based filtering.

The term "predefined set of information inquiries" refers to a specific collection of questions or criteria that are established in advance to guide the process of gathering, classify and/or process relevant information. In the context of the method described, this set of inquiries is e.g., used to assess the adequacy of information provided in social media posts regarding power outages.

The term "deterministic filtering operations" refers to filtering operations based upon predefined rules, fixed thresholds, or explicitly defined criteria such that, given identical input data, identical filtering results will consistently be obtained. These operations explicitly apply a parameter-driven selection, such as matching keywords, evaluating numeric values against fixed numeric thresholds, or verifying exact matches of metadata, thereby inherently excluding stochastic or probability-based decision-making.

The term "probabilistic filtering operations" refers to filtering operations relying upon statistical inference, probability distributions, likelihood assessments, confidence scores, or stochastic processes, such that filtering results may vary or have inherent uncertainty, even when repeatedly applied to identical input data. Such operations typically involve determining selection based on calculated probabilities, probabilistic confidence levels, Bayesian inference, or similar methods.

The term "machine-learning based filtering operations" refers to filtering operations employing machine-learning models trained on example data sets to infer selection criteria. These filtering operations utilize models, including but not limited to neural networks, support vector machines, decision trees, or large language models (LLMs), configured to perform selections based on learned patterns, semantic understanding, or inferred correlations, rather than explicit, rule-based criteria. Such operations inherently rely upon model inference capabilities developed during a training phase.

An "Outage Management System" (OMS) is a software application used by utility companies to monitor, manage, and restore electrical service during outages. It integrates various data sources, such as geographic information systems (GIS), supervisory control and data acquisition (SCADA) systems, and customer service databases, to provide real-time information about the status and location of outages. Key features of an OMS may include: visualizing outages and affected areas through mapping tools; and, facilitating the coordination of repair crews and resources to expedite service restoration.

A "Power Distribution System" (PDS) encompasses a network of components that deliver electricity from one or several transmission system to individual consumers. This system includes various elements such as substations, transformers, distribution lines, and circuit breakers. The key functions and characteristics of a PDS include: reducing high-voltage electricity from the transmission system to a lower voltage suitable for consumer use; and, balancing the demand for electricity among various consumers and implement various protective devices or mechanisms to ensure stability and reliability. The term "power distribution system" may thus consist of one large interconnected transmission system or several independent sub-transmission systems.

The term "social media post" refers to a content uploaded (i.e., posted, shared or transmitted) by a user on a social media network, comprising textual, visual, audio, video, and/or multimedia information. The social media data of a social media post may include any type of content uploaded and any metadata associated with the social media post, including, but not limited to, user identification, time stamps, geolocation data, tags, hashtags, likes, comments, shares, or engagement metrics.

The term "social media network platform" refers to a computer-implemented platform or online service accessible via a communication network, configured to facilitate user-generated content sharing, communication, interaction, or collaboration between users, typically by allowing users to create, distribute, retrieve, and engage with social media posts.

In some embodiments, the network node is configured to implement a predictive analysis module, which uses historical power distribution data in conjunction with meteorological and other external datasets to anticipate potential outages before they become evident on social media. By applying machine learning or other advanced algorithms, the network node can identify patterns indicative of imminent power distribution failures and proactively trigger alerts or maintenance actions. Such a proactive feature improves the overall reliability of the power distribution system by reducing the time between the onset of adverse conditions and the initiation of corrective measures.

In further embodiments, the interactive participant protocol and associated LLM-based chatbot may be adapted to process and respond to voice inputs through a voice recognition engine. In this manner, users who prefer or require voice communication can report and clarify potential power issues without relying on textual input. This enhanced accessibility can increase user engagement, further expand the volume of relevant outage data, and streamline the data collection process for the utility operators.

In yet another embodiment, the network node is adapted to permit utility providers or other authorized operators to interact with compiled social media data-and any related power distribution information-via natural language prompts. Specifically, an operator could query the network node using plain language commands to extract insights on outage patterns, geographic hot spots, or user feedback trends. This embodiment may also be extended to the interactive participant protocol, or user engagement protocol such that utility operators can automatically generate prompts or inquiries for social media users within a specified location. By leveraging this natural language interaction, the utility providers achieve a more efficient and intuitive means of analyzing and responding to evolving power distribution conditions.

In another embodiment, once a power distribution problem has been resolved, the network node triggers a post-event survey managed by an LLM-based chatbot. This survey, presented to users through the same social media or messaging channels used for outage reporting, gathers feedback on the perceived severity, duration, and impact of the outage experience. The collected data can then be aggregated and analyzed by the utility provider to guide future grid improvements, inform preventive maintenance schedules, and refine predictive models for outage prevention. Such iterative feedback loops further enhance the accuracy and resilience of the power distribution infrastructure over time.

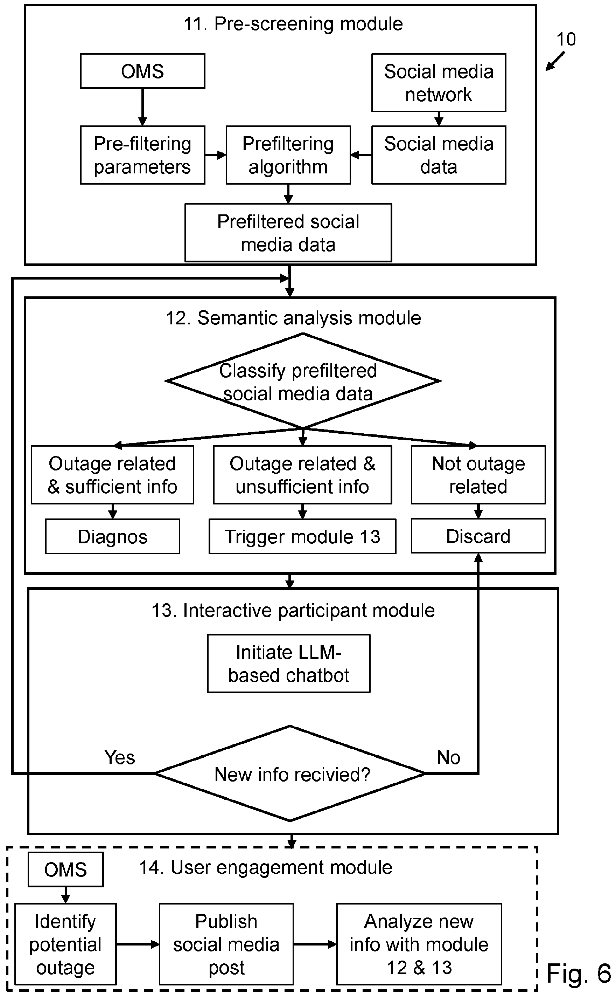

Figure 6 illustrates one embodiment according to the present invention. The framework **10** illustrated in figure 6 leverages the recent development of LLMs, which enable automatic and detailed sentiment analysis of text data and allow for real-time interaction using natural language. By combining these capabilities with rapid pre-screening, the framework 10 according to this embodiment assumes filtering large volumes of social media data to identify and flag inputs related to power outage events, i.e., power distribution problems. The framework 10 in figure 6 includes four key modules:
- A pre-screening module **11** - enabling fast pre-processing through keyword filtering, hashtag analysis, geolocation, and timestamp filtering. This module aims to reduce computational load of subsequent modules and accelerate detection by performing initial screening of vast social media data. In the illustrated embodiment, the social media data input for the pre-screening module 11 comes from publicly available information on social media platforms like X, Facebook, WeChat or other user-generated content sites. APIs or data scraping techniques may be used to collect real-time social media posts and their available metadata, including geolocation, user information, and time of posting.

The "pre-screening module 11" according to the present embodiment performs the pre-filtering operation recited in relation to the first aspect of the invention. It retrieves 101 social media data from various social media network platforms and filters 102 it using parameters such as keywords, hashtags, timestamps, and geolocation. This process reduces the amount of data requiring subsequent processing.
- A semantic analysis module **12** - after pre-screening, LLM-based natural language processing is used to analyze potentially relevant social media posts and classify each of them into one of the three categories:
   - non-outage related: posts are excluded from further processing,
   - outage-related with sufficient information: data directly added to the social media analysis report,
   - outage-related but lacking key details: requires follow-up with the author of the social media post.

Using a LLM engine in this passive screening semantic analysis module 12 allows to detect relevant content even when textual information is implicit or contains slang, informal language, or incomplete references. The semantic analysis module 12 could additionally conduct an urgency analysis, and assign an urgency score to the social media post. The urgency score may then be used to prioritize the reports in an OMS for further diagnosis.

The semantic analysis module 12 determines 103 if the pre-filtered social media data of the social media post is connected to a power distribution problem in a power distribution system; and classifies 104 the social media data of the social media post as comprising sufficient or insufficient information so as to define the power distribution problem according to a predefined set of information inquiries. In the illustrated embodiment, these two operations 103, 104 performed in accordance with the first aspect of the present invention are performed in one operation within the semantic analysis module 12.
- A interactive participant module **13** - that is triggered when an social media post related to a power distribution problem with insufficient information is detected by the semantic analysis module 12, indicating that the information is potentially relevant but incomplete. In the illustrated embodiment, the interactive participant module 13 deploys a real-time chatbot to engage with the specific social media user who published the post. In the illustrated embodiment, this engagement preferably occurs through private messaging on the user's chosen social media or messaging platform. The chatbot gathers e.g., missing information and clarifies power distribution problem details.

In other words, the interactive participant module 13 is responsible for performing the operations within the interactive participant protocol 105 in accordance with the first aspect of the present invention or embodiments thereof.
- A user engagement module **14** - this module is tasked with engaging social media users by prompting them to share updates related to a power distribution problem when a potential power distribution problem affecting an area is detected. The user engagement module 14 may post a social media post aimed to gather more information about possible power distribution problems. Additionally, this module 14 may automatically interact with social media users to provide instructions and updates on power distribution problems.

Thus, the user engagement module 14 may be said to be responsible for performing the operations within the user engagement agent protocol 107 in accordance with embodiments of the first aspect. The dashed lines in figure 6 indicate that the operations associated with the user engagement module 14 is optional according to the first aspect of the invention.

Comprehensive reports of social media analysis may then be produced for power grid operators either on a regular schedule or in response to significant events, such as during periods of high activity, resulting in the event-based reports. It should be understood that such operations may be comprised in creating 106 a power distribution problem diagnosis in accordance with the first aspect of the present invention or embodiments thereof.

### Example of implementation

To illustrate the proposed multi-step processing and interaction framework 10 of the embodiment illustrated in figure 6, a simplified example of its application will now be discussed. This example is designed to highlight some key features and steps of the framework 10 without delving into the complexities that would be encountered in a real-world scenario.

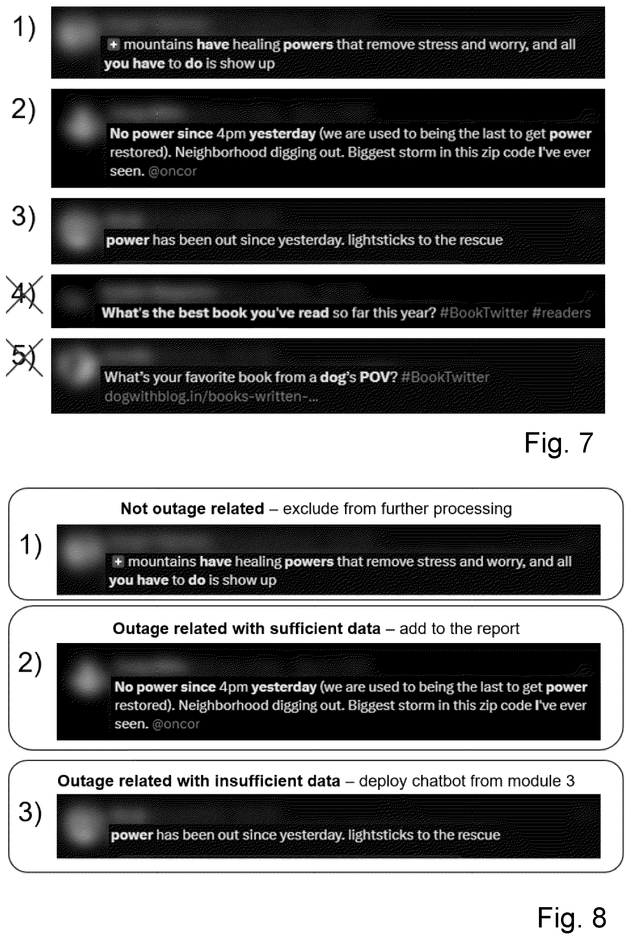

The process in this example starts by scanning social media posts within a given timeframe. This results in receiving five different posts. The first step, illustrated in figure 7, involves filtering these social media posts by identifying the keyword "power".

After this initial filtering, three messages are remaining. Next, as presented in figure 8, the interactive participant module 13 is triggered, which is the LLM-powered sentiment analysis. In the example, the first social media post is classified as non-power distribution problem related, the second social media post has enough social media data to be added to a queue for processing power distribution problem diagnosis, and the third post is likely related to a power distribution problem but lacks sufficient data to determine this with certainty.

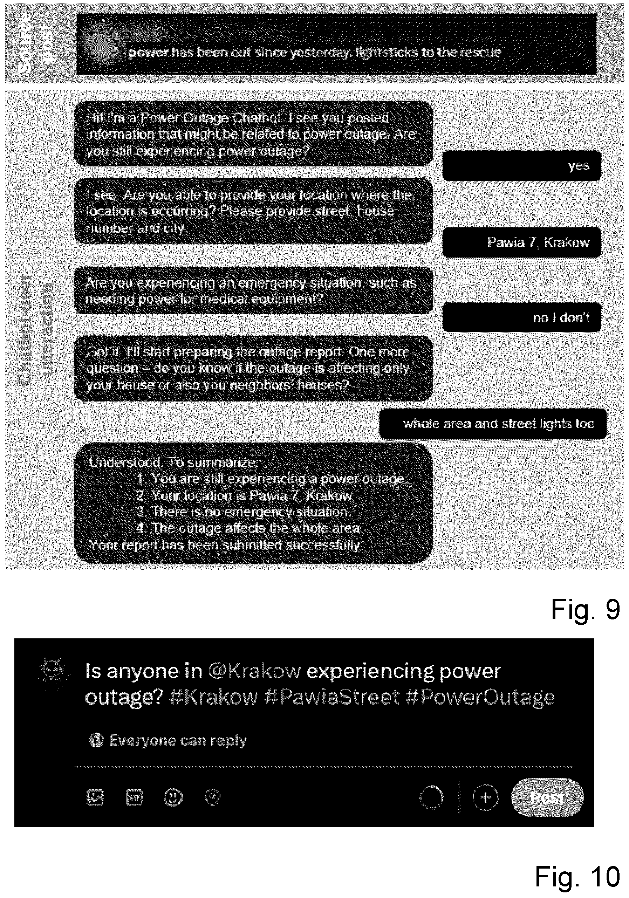

An LLM-driven chatbot is then deployed to engage with the user who is the author of that third post, as shown in figure 9. The chatbot interacts with the user in real-time to retrieve missing information, such as location and time details, ensuring the social media data is complemented as to be considered complete as to define the power distribution problem and accurate for the purpose of initiating a power distribution problem diagnosis.

The user engagement module 14 may operate in parallel to other modules. Based on the analysis of the social media posts, it identifies a potential issue in the given area. To gather more information, it creates a publicly available message that prompts the community to share updates about any ongoing power distribution problem, as shown in the example illustrated in figure 10.

This example simplifies the process for clarity and it's important to note that real-world deployment of the proposed embodiment of figure 6-10 is more complex. For example, filtering posts based on a single keyword is a crude approach - the actual implementation would need to handle ambiguous phrasing, slang, misspellings, and contextual relevance known to the skilled person. Furthermore, the interactive participant module 13 may implement solution known to the skilled person to handle challenges associated with factors such as sarcasm, indirect mentions, or conflicting information within a post.

### Presentation of study

The inventors have performed a study to explore the effectiveness of the proposed solution according to the embodiment illustrated in figure 6.

This study serves as an initial demonstration of one embodiment according to the present invention and it should be recognized that the study has been carried out with limited resources and does not capture the full complexity of practical, large-scale scenarios. The methodology used in this study is presented in the following.
1) Filtering process: The validation of the non-LLM prescreening is relatively straightforward but crucial for confirming framework reliability. This task should involve checking if the system can correctly filter and sort social media data based on specific keywords and date ranges present in the metadata. Further testing with more advanced filtering techniques known to the skilled person, e.g., topic-modelling, and within large datasets may enhance the framework's 10 capabilities. Evaluations relating to the filtering process are beyond the scope of this study.
2) LLM engine validation: The validation and evaluation of LLM sentiment analysis capabilities are complex topics, with numerous research papers exploring different benchmarking approaches. Given the rapid advancement of both open-source and commercial LLMs, exhaustive comparative evaluations for a single use case is impractical. Therefore, this study aims to highlight effectiveness of the framework 10 illustrated in figure 6-10 as a whole, rather than conducting a comprehensive assessment of individual models, acknowledging that the landscape of LLMs is constantly evolving. For those reasons, the evaluation in this study employed the Mixtral-8x7B-Instruct-v0.1 model to explore the initial feasibility and effectiveness of the framework 10, rather than perform rigorous benchmarking.

In this part of the study the focus is on testing two key aspects of the LLM's usage in the framework 10 illustrated in figure 6- sentiment analysis and Named Entity Recognition (NER).

For sentiment analysis, the LLM was tasked with determining whether a given message was relevant to ongoing power distribution problem management. The LLM output was supposed to be 'yes' for power distribution problem-relevant messages and 'no' for not relevant messages. In case the output did not match either of those categories, the LLM was configured to output the decision as 'other answer'. It is important to distinguish this third category, since unclear output in nonstandard formatting cannot be automatically processed and may require further human evaluation. To analyze the models reliability, standard metrics, including F1 score, accuracy, precision, and recall were used. Additionally, weighted average for calculations of those metrics were used.

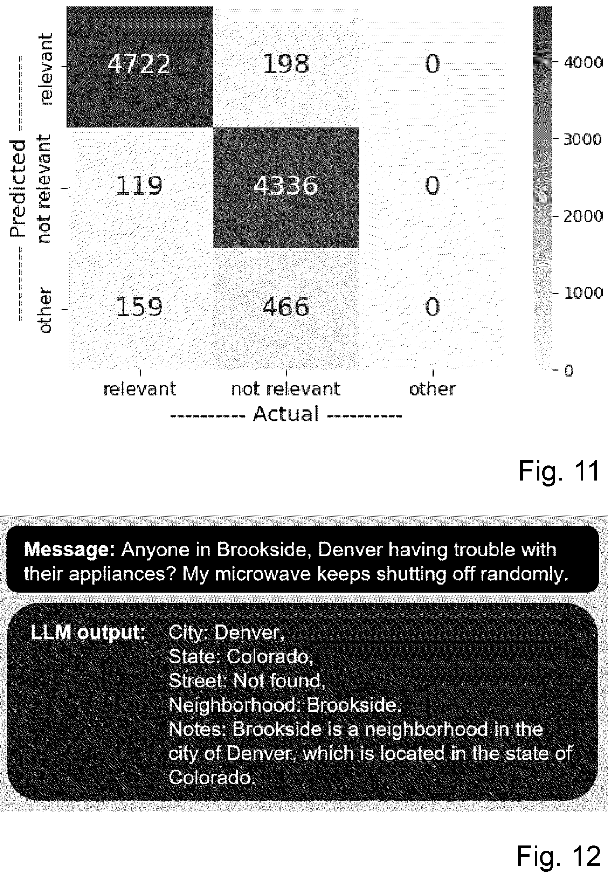

In the NER tests, the model's capability to accurately identify and extract location details, such as city and street names, from the message was evaluated. If the LLM extracted and formatted its output as requested (see example on figure 12), it was deemed as a correct answer. Otherwise, the answer was marked as incorrect.

The dataset used for both of the aforementioned tests consisted of 10,000 synthetically prepared messages, designed to cover a range of scenarios relevant to power distribution problem diagnosis. The dataset was evenly split, with 50% of the messages labelled as indicating a power distribution problem and the remaining 50% classified as non-power distribution problem related. Messages varied in content and format. Examples include:
- Messages which specifically reported an ongoing power outage - e.g., "Hello, I'm reporting a power outage at 554 Hickory Lane, San Antonio. Everything just went off. Can you help us out?".
- Messages mentioning information about past power outages - e.g., "San Francisco's '18 blackout had me realizing how much we rely on tech... and light switches". • Messages which used words like "energy", "blackout" or "power" but were not related to power outage - e.g., "Trying to harness that energy from the sunrise morning meditation. It's all about finding your inner power #MorningEastCoast #Baltimore".
- Messages mentioning issues with electricity-related equipment but not relevant to a power distribution problem - e.g., "Hey, it's Melissa from 815 Willow Street in Atlanta. The lights are on, but my HVAC system keeps turning off by itself. Is that an outage thing?".
- Short social media messages containing hashtags and emojis - e.g., "Power just went out at 1000 Walnut St, Philadelphia. Any updates? I need my Netflix! #Philly #Outage".
- Messages which would be intended for group chats or online forums - e.g., "Hey, anyone in Sunnyside, Raleigh have issues with their fridge? Mine keeps turning on and off.".

3) The chatbot validation: To validate the chatbot's performance, multiple user-chatbot conversations designed to assess its robustness, adaptability, and task-focused capabilities were conducted. To automate the process of testing, two Mixtral-8x7B-Instruct-v0.1 instances were implemented to conduct chats automatically with each other, mimicking various user and chatbot behaviors. Although some chatbot frameworks, such as the Microsoft Bot Framework, were used during the manual testing phase of the solution, they were not needed in the validation process, as two LLMs communicated directly with each other. This approach ensured a streamlined and efficient validation process, focusing solely on the interaction between the language models.

The transcripts of the conversations were manually analyzed to evaluate the model task compliance, user adaptability, and security robustness. The first metric, task compliance, measured the chatbot's ability to remain focused exclusively on power distribution problem diagnosis, regardless of user input. Each conversation was reviewed to assess whether the chatbot successfully maintained this focus without being sidetracked by unrelated topics. User adaptability was evaluated by analyzing the chatbot's responsiveness to diverse user interactions, including variations in personality, language, and cooperation levels. Additionally, the chatbots ability to accurately interpret user intent and provide clear responses, particularly when faced with ambiguous phrasing or language limitations was evaluated. To test security robustness, the chatbot's resistance to prompt injection, manipulation, and unauthorized information requests was evaluated. Conversations were reviewed to determine whether the chatbot successfully prevented unauthorized access and resisted adversarial attempts to alter its behavior.

4) User engagement: It is important to note that the study did not include evaluating user engagement. Measuring engagement would require real-world deployment and long-term user interaction data, which is beyond the scope of this study.

The conducted evaluation of the LLM engine for sentiment analysis, as described in the above, demonstrated high accuracy in identifying power distribution problem-related social media messages. The detailed results are illustrated in figure 11 in the form of a confusion matrix. The model achieved the F1 score of 93%, accuracy of 91%, precision of 91%, and the recall of 97% in classifying sentiment of 10,000 messages. Around 6% of messages were classified as 'other', indicating that the model struggled with creating clearly formed decisions for some messages. It is worth noting that only 119 messages that were relevant to ongoing power distribution problem were marked as not relevant by the LLM. This reflects the model's high precision in detecting relevant messages, which helps avoid missing crucial information that could influence power distribution problem management.

The accuracy of the LLM in extracting and identifying location details from the provided messages was evaluated. The model achieved an accuracy of 97% for city identification, and 95% for identifying other specific location details such as state, street or neighborhood. An example of a full answer using the LLM for NER is shown in figure 12.

To evaluate the chatbot interactions, manual analyses of each conversation was conducted, focusing on task compliance, user adaptability, and security robustness. The task compliance analysis showed that the chatbot effectively adjusted responses across diverse interactions, maintaining a neutral tone even when users expressed frustration or used aggressive language.

User adaptability analysis showed that the chatbot handled difficult interactions well, maintaining professionalism and staying on topic. It effectively processed incomplete or misspelled inputs but occasionally created reports too quickly or asked too many detailed questions.

The security robustness analysis showed that the chatbot adhered to its boundaries, resisting prompt injection and manipulation attempts. It maintained secure interactions, though some scenarios highlighted potential weaknesses in context understanding.

By leveraging advanced AI techniques, utility companies might enhance their response capabilities, improve community engagement, and foster a more resilient infrastructure. This approach could empower social media users to report power distribution problems and receive timely updates, thereby creating a more connected and responsive relationship between utility companies and their customers.

Given the sensitive nature of utility management systems, it is crucial to ensure that the integration of social media data does not expose the system to cyberattacks. To mitigate this risk, the method may involve e.g., human operators to review reports generated from the semantic analysis module 12 before any data is input to e.g., a OMS. This human-in-the-loop approach may ensure that critical decisions are made with oversight, reducing the vulnerability to cyber threats. Alternatively, to automate the process a AI-based operator may review reports generated from semantic analysis module 12 as opposed to human operators.

Additionally, it is important to note that the reliance solely on social media data may not be entirely secure or comprehensive. Telephone reporting and most importantly, AMI data collection should not be replaced, but complemented by the proposed method for power distribution problem identification.

Using LLMs can be challenging due to their complexity and resource demands. However, the above mentioned study with smaller models have shown promising results, suggesting these challenges are manageable. It is important to note, that when deploying external LLM services, data privacy and security concerns arise. To address this, utility companies could deploy LLMs on in-house servers. Since even small models performed well, this approach balances advanced AI benefits with data privacy and control.

In other words the LLM used in the interactive participant module 13 and/or the user engagement module 14 may utilize either smaller LLMs deployed on in-house servers or external LLM services. This approach may balance the benefits of advanced language understanding with data privacy and control requirements.

A strength of the proposed method lie in its automatic and efficient processing capabilities. By incorporating fast pre-screening of social media posts, the processing times and computational load are significantly reduced. The initial prefiltering allows the network node to quickly identify potentially relevant social media posts, which may then be subjected to more detailed analysis using capable LLMs. The combination of passive screening and active components, such as deploying chatbots and engagement posts, ensures a comprehensive approach to data collection and user interaction. This dual strategy enhances the system's responsiveness and scalability, reducing the need for manual monitoring and intervention.

In terms of application, the method also offers several key benefits. Economically, faster detection of power distribution problems could reduce downtime and allow for more efficient deployment of repair crews, thereby minimizing economic losses for utility companies. The automation of semantic analysis and real-time user interaction might improve the system's scalability and overall response time, as tracking messages from wider geographic area might become more feasible. Socially, the enhanced engagement with social media users could raise public awareness and foster a sense of shared responsibility.

In various embodiments, the following hardware components may be included in or associated with the "network node," as defined in the present application, to carry out the functionalities described herein:

A network interface may e.g., retrieve social media posts (or associated social media data) from a social media network platform. The retrieved data could be received over a wired or wireless communication link, and may be conveyed to a memory or other storage medium within the network node.

A memory (e.g., random access memory (RAM), read-only memory (ROM), solid-state drive, or other non-transitory storage medium) may e.g., store the social media data retrieved by the network interface.

The network node retrieving the social media data may thus e.g., retrieve the data from a memory and/or a network interface.

The memory could further store a set of pre-filtering parameters, a predefined set of information inquiries, and any other data or instructions necessary for initiating, executing, or resuming an interactive participant protocol.

A processor, microcontroller, or similar processing circuitry may execute instructions to pre-filter the social media data according to the stored pre-filtering parameters.

The processor could for example: determine whether the pre-filtered social media data is connected to a power distribution problem in a power distribution system; and, classify the social media data as comprising sufficient or insufficient information to define the power distribution problem.

The processor may also initiate an interactive participant protocol (e.g., instantiating or invoking an LLM-based chatbot) to communicate with the user who posted the social media content, and could incorporate any newly retrieved information into a subsequent classification step.

Upon identifying those social media posts containing sufficient information, the processor may generate and store (or otherwise output) a power distribution problem diagnosis.

The network node may include an I/O subsystem that could transmit inquiries to the LLM-based chatbot, receive user responses, and forward relevant data to the processor and memory.

The I/O subsystem may, for instance, present user queries via a graphical user interface or messaging interface, and could relay user-provided information back for further processing.

It should be appreciated that each of the above-mentioned components may be integrated together in a single device or distributed across multiple devices and/or systems in communication with one another. In certain embodiments, the network node could also comprise or be part of an outage management system, or could interface with such a system to facilitate identification and diagnosis of power distribution issues.

The foregoing description of the operations recited in any of the above embodiments has been provided for illustrative purposes and is not intended to be exhaustive or to limit the invention to the precise form disclosed. Modifications and variations may be derived from the above teachings or become apparent through implementation of the method in practice.

While a given sequence of method steps has been described, the order of execution of these steps may be altered without departing from the scope of the invention. In addition, any steps that are not mutually dependent may be performed in parallel, as will be apparent to a person skilled in the art.

The method according to above described embodiments may be implemented in software, firmware, hardware, or any suitable combination thereof. The specifics of software code, specialized control hardware, or both, are not limiting of the invention; rather, the behavior of the disclosed method steps is determinative, and the precise implementation details may be varied in accordance with routine skill in the art.

Certain functionalities, such as those relating to pre-filtering the social media data or managing the interactive participant protocol, may be realized as components or logic. A component or logic may include hardware (e.g., a processor, an ASIC, or an FPGA) or a combination of hardware and software (e.g., a processor executing instructions that implement at least part of the method).

Unless explicitly stated otherwise, the term "comprises" (and its grammatical variants) is used herein in an open-ended sense, signifying "includes at least the stated features," and does not exclude other features or elements that are not explicitly recited.

Although particular combinations of features are referred to in the dependent claims and/or the embodiments disclosed in the specification, such references are not intended to limit the invention; many features may be arranged or combined in ways not explicitly recited. Each dependent claim is hereby disclosed in combination with all other claims in this application, regardless of the direct dependency stated.

No element, act, or instruction discussed in this specification should be deemed indispensable unless explicitly designated as essential to the invention. Moreover, the singular forms "a," "an," and "the," as used herein, include plural referents unless explicitly stated otherwise, and "based on" should be interpreted to mean "based, at least in part, on," unless explicitly stated otherwise.

## Claims

1. A method, performed by a network node, comprising:
retrieving (101) social media posts including social media data from a social media network platform;
pre-filtering (102) the social media data of a social media post based on a set of pre-filtering parameters;
determining (103) if the pre-filtered social media data of the social media post is connected to a power distribution problem in a power distribution system;
classifying (104) the social media data of the social media post as comprising sufficient or insufficient information so as to define the power distribution problem according to a predefined set of information inquiries;
for each social media post including social media data classified to comprise insufficient information, initiating an interactive participant protocol (105) comprising at least the steps of:
initiating (105a) a LLM based chatbot to interact with the user who posted the social media post, wherein the LLM based chatbot is configured to inquire about information relating to the predefined set of information inquiries;
determining (105b) if the social media post is connected to a power distribution problem in the power distribution system based on at least the interaction with the user who posted the social media post;
reclassifying (105c) the social media data of the social media post as either sufficient or insufficient so as to define the power distribution problem according to the predefined set of information inquiries; and,
for each of the social media posts including social media data classified to comprise sufficient information, creating (106) a power distribution problem diagnosis.

2. The method according to claim 1, wherein the power distribution system is associated with an outage management system (20); and, wherein creating (106) the power distribution problem diagnosis comprises compiling (106a) the social media data of the social media post into a trouble report; and transmitting (106b) said trouble report to the outage management system (20).

3. The method according to claim 2 further comprising:
for each of the trouble reports received by the outage management system, initiating a user engagement agent protocol (107) comprising at least the steps of:
retrieving (107a) user engagement instructions from the outage management system;
transmitting (107b) a social media post to the social media network based on the user engagement instructions.

4. The method according to any previous claim, wherein: determining (103) if the pre-filtered social media data of the social media post is connected to a power distribution problem in the power distribution system; and/or, classifying (104) the social media data of the social media post is connected to a power outage as comprising either sufficient or insufficient information is performed by:
providing (103a, 104a) the social media data of the social media post as input to a LLM; and,
receiving (103b, 104b): a determination if the pre-filtered social media data of the social media post is connected to a power distribution problem in the power distribution system; and/or, a classification of the social media data of the social media post connected to a power outage as comprising either sufficient or insufficient information.

5. The method according to any previous claim, wherein the predefined set of information inquiries comprises at least the location of a power outage and wherein the social media data of the social media post is classified as comprising sufficient information if it comprises at least the location of a power distribution problem.

6. The method according to claim 2 or 3, wherein creating a power distribution problem diagnosis comprises retrieving additional data from at least one of: the outage management system, IoT sensors, satellite imagery, utility company reports, advanced metering infrastructure, power system simulation results, measurements from various grid components and/or video surveillance data.

7. The method according to any previous claim, wherein the predefined set of information inquiries comprises at least one of: location of the power distribution problem; severity of the power distribution problem; and/or duration of the power distribution problem; and, wherein the LLM based chatbot initiated as part of the interactive participant protocol (105) is configured to inquire about information relevant for determining (105a) if the social media data of the social media post is connected to a power distribution problem in the power distribution system before inquiring about information relating to at least one information inquiry among the predefined set of information inquiries.

8. The method according to any previous claim, wherein the predefined set of information inquiries comprises inquiries relating to the severity of a power distribution problem and/or the duration of a power outage; and wherein the method further comprises:
for the social media data of the social media post classified to comprise sufficient information and lacking information about at least one information inquiry amongst the predefined set of information inquiries:
initiating a LLM based chatbot to interact with the user who posted the social media post, wherein the LLM based chatbot is configured to inquire about information relating to at least one information inquiry amongst the predefined set of information inquiries.

9. The method according to any previous claim, wherein the method additionally comprises:
performing an urgency analysis on the social media post to determine an urgency score indicative of a time-criticality or severity level of a power distribution problem associated with the social media post; and
utilizing the urgency score to prioritize the creation and/or handling of a power distribution problem diagnosis associated with the social media post.

10. A computer program (1130) comprising instructions, which when executed by a processor (1110), causes the processor (1110) to perform actions according to any of the claims 1-9.

11. An outage management system 20, configured to receive a trouble report compiled from social media data and transmitted to the outage management system 20 in accordance with the method of claim 2.
